# FASCICULE DE BREVET EUROPEEN

(11) **EP 3 962 814 B1**
(45) Date de publication et mention de la délivrance du brevet: **20.03.2024**
(21) Numéro de dépôt: 20742319.5
(22) Date de dépôt: 05.06.2020
(51) Int. Cl.: B64G 1/14, B64G 1/62, B64D 27/02, B64D 29/02, B64C 5/00, B64C 9/00

(54) **AÉRONEF SPATIAL À CONCEPTION ET ARCHITECTURE OPTIMISÉES**
RAUMFLUGZEUG MIT OPTIMIERTER KONSTRUKTION UND ARCHITEKTUR
SPACE AIRCRAFT WITH OPTIMISED DESIGN AND ARCHITECTURE

(30) Priorité: 07.06.2019 FR 1906098; 07.06.2019 FR 1906101
(43) Date de publication de la demande: 09.03.2022
(73) Titulaire: ArianeGroup SAS, 78130 Les Mureaux (FR)
(72) Inventeur: PRAMPOLINI, Marco, 78240 CHAMBOURCY (FR); BOURGOING, Alexis, 92150 SURESNES (FR)
(74) Mandataire: Cabinet Le Guen Maillet
(86) Numéro de dépôt international: PCT/FR2020/050962
(87) Numéro de publication internationale: WO 2020/245549

(56) Documents cités:
- EP-A1- 0 631 931
- DE-A1- 2 618 644
- FR-A- 1 112 264
- US-A- 1 348 983
- US-A- 3 260 481
- US-A- 3 884 432
- US-A- 4 538 779
- US-A- 4 802 639
- US-A1- 2010 314 498

## Description

### DOMAINE TECHNIQUE

La présente invention concerne un aéronef spatial, c'est-à-dire un engin spatial apte à réaliser une rentrée atmosphérique, c'est-à-dire un retour sur Terre en volant, présentant une conception et une architecture optimisées.

### ÉTAT DE LA TECHNIQUE

Bien que non exclusivement, l'aéronef spatial selon la présente invention peut notamment être un module spatial, c'est-à-dire un engin faisant partie d'un lanceur spatial, d'une fusée sonde ou d'un véhicule expérimental assimilé. Un tel module comprend notamment un ensemble de propulsion, et est destiné à être récupéré sur Terre après que le lanceur spatial, la fusée sonde ou le véhicule expérimental assimilé a effectué sa mission. Le document DE2618644 A1 divulgue un aéronef spatial selon l'état de l'art. Le document US4538779 A divulgue un aéronef supersonique configuré pour un vol dans l'atmosphère.

Par le document FR-2 961 179, on connaît un tel module spatial récupérable pour lanceur spatial. Ce module comporte des éléments présentant un coût élevé, et dont la réutilisation est très avantageuse, tels que notamment un ensemble propulsif, un système de pressurisation, l'avionique et des moyens de génération de puissance électrique.

On sait que, lors de la rentrée atmosphérique, un tel aéronef ou module spatial est soumis à des vitesses élevées qui génèrent, en particulier, des problèmes de stabilité, notamment via la génération d'ondes de choc et de décollement de couche limite.

En particulier, une génération d'ondes de choc au milieu des ailes peut provoquer un détachement important de l'écoulement et ainsi générer une perte de stabilité à la fois longitudinale et latérale de l'aéronef.

Une telle situation n'est pas satisfaisante.

### EXPOSÉ DE L'INVENTION

La présente invention concerne un aéronef spatial, permettant de remédier aux inconvénients précités, en évitant une perte de stabilité longitudinale et latérale. Ledit aéronef spatial est du type comportant un fuselage et deux ailes agencées de part et d'autre dudit fuselage, lesdites ailes étant agencées de sorte que leurs bords d'attaque respectifs sont situés à une position dite première position longitudinale le long d'un axe longitudinal dudit fuselage, l'aéronef spatial comprenant également deux nacelles agencées aux extrémités des ailes, ces nacelles portant chacune un empennage vertical et un empennage horizontal.

Selon l'invention, ledit fuselage présente une section transversale de taille variable le long de l'axe longitudinal dudit fuselage, et, de l'avant vers l'arrière de l'aéronef spatial, le long de l'axe longitudinal, la taille de la section transversale du fuselage augmente jusqu'à une section transversale maximale puis diminue, et la section transversale maximale est située à une position dite seconde position longitudinale le long dudit axe longitudinal, cette seconde position longitudinale étant située à l'avant de ladite première position longitudinale (correspondant à la position des bords d'attaque des ailes au niveau du fuselage).

La position de la section transversale maximale du fuselage sur l'aéronef spatial détermine approximativement la position longitudinale d'une onde de choc transsonique. Ainsi, en situant la section transversale maximale à l'avant du bord d'attaque des ailes, on positionne la première onde de choc devant le bord d'attaque des ailes dans le régime transsonique, ce qui permet d'éviter ou tout au moins de limiter une seconde onde de choc au milieu des ailes. Ceci empêche l'apparition d'un détachement important de l'écoulement, tel que précité, et ainsi évite une perte de stabilité longitudinale de l'aéronef spatial dans ces conditions.

L'agencement d'empennages sur les nacelles latéralement par rapport au fuselage permet d'augmenter le moment exercé par chacun des empennages autour du centre des masses de l'aéronef spatial, et donc d'accroître l'efficacité des empennages en matière de stabilisation de l'aéronef spatial.

De plus, l'aéronef spatial est de préférence dépourvu d'empennage central (c'est-à-dire agencé sur le fuselage, typiquement à l'extrémité arrière de ce dernier), en particulier dans les cas où l'aéronef spatial comporte un moteur-fusée à l'extrémité arrière du fuselage.

Comme cela apparaîtra plus clairement dans ce qui suit, la stratégie de conception de l'aéronef spatial, adoptée dans le cadre de la présente invention, qui permet de satisfaire une loi des aires, permet de maîtriser le déplacement du foyer aérodynamique sur tout le domaine de nombres de Mach rencontré par l'aéronef spatial au cours d'une rentrée atmosphérique typique.

Avantageusement, à l'arrière de ladite seconde position longitudinale de section transversale maximale, le fuselage présente une surface externe de forme telle qu'elle présente avec l'axe longitudinal un angle, de préférence variable, qui est inférieur ou égal à 7°. Ceci permet d'éviter un détachement subit de l'écoulement sur le fuselage, à l'arrière de la section transversale maximale.

Par ailleurs, avantageusement, chacune desdites nacelles présente une section transversale de taille variable le long de l'axe longitudinal dudit fuselage. De l'avant vers l'arrière, le long de l'axe longitudinal, la taille de la section transversale de chacune desdites nacelles augmente jusqu'à une section transversale maximale puis diminue, et la section transversale maximale se trouve à une position le long dudit axe longitudinal, qui est située entre le bord de fuite de l'aile et le bord d'attaque de l'empennage horizontal de la nacelle considérée.

Les caractéristiques précédentes permettent des positionnements avantageux d'ondes de choc transsoniques, à proximité des sections transversales maximales, en amont des surfaces de commandes de la nacelle et de la voilure principale qui restent ainsi le plus possible épargnés de toute perturbation d'ondes de choc dans le régime de vol transsonique.

Par ailleurs, de façon avantageuse, les carénages des nacelles et des ailes sont configurés pour augmenter localement la robustesse à la séparation de flux transsonique.

Dans un mode de réalisation, sur chacune desdites nacelles, l'empennage vertical et l'empennage horizontal sont agencés sur la nacelle considérée de sorte qu'une section transversale maximale de l'empennage vertical est située, longitudinalement, à l'arrière d'une section transversale maximale de l'empennage horizontal, afin de minimiser les interférences entre les surfaces de commande, en particulier dans des régimes de vol transsoniques de l'aéronef spatial.

Par ailleurs, de façon avantageuse, l'aéronef spatial comporte au moins certains des systèmes suivants :
- des systèmes avioniques et un système de pressurisation agencés dans le nez de l'aéronef spatial ;
- des unités de propulsion aéronautique agencées dans les nacelles, à l'avant desdites nacelles ;
- au moins un moteur-fusée agencé à l'arrière de l'aéronef spatial ; et
- des réservoirs de carburant agencés dans les ailes de l'aéronef spatial à proximité du fuselage.

De préférence, les unités de propulsion aéronautique sont agencées à l'avant d'une ligne de torsion des ailes de l'aéronef spatial.

En outre, avantageusement, les positions en envergure des nacelles sont situées au-delà d'un profil maximal d'expansion de gaz d'échappement du moteur-fusée à l'arrière de l'aéronef spatial, un tel profil maximal étant typiquement obtenu hors atmosphère en fin de phase propulsée.

Par ailleurs, de façon avantageuse, des systèmes principaux de l'aéronef spatial sont séparés les uns des autres.

En outre, avantageusement :
- le fuselage est axisymétrique ; et/ou
- les ailes sont positionnées à mi-plan ; et/ou
- les nacelles sont agencées dans un plan moyen des ailes.

En outre, de façon avantageuse, chacun desdits empennages verticaux comprend une dérive fixe et une gouverne de direction, la gouverne de direction est une gouverne de direction de type double (« split rudder » en anglais) comprenant deux volets de direction mobiles indépendants, chacun desdits volets de direction étant apte à être braqué individuellement de manière à ce que la gouverne de direction double puisse prendre l'une quelconque de positions différentes comprenant une position dite fermée dans laquelle les volets de direction sont en contact superficiel l'un de l'autre et des positions dites ouvertes dans lesquelles les volets de direction présentent des angles d'ouverture particuliers entre eux, et l'aéronef comporte, de plus, un système de commande configuré pour commander le braquage des volets de direction de chacune des gouvernes de direction.

De telles gouvernes de direction offrent, par leur efficacité accrue, une aptitude optimale à manoeuvrer l'aéronef spatial y compris à des vitesses supersoniques, et cela alors-même que le profil aérodynamique de l'aéronef spatial est par ailleurs optimisé pour des vitesses subsoniques.

De préférence, chacun desdits empennages verticaux est agencé sur la nacelle de sorte qu'un plan moyen de la dérive fixe présente un angle, compris entre 7° et 13°, et encore plus préférentiellement sensiblement égal à 10°, par rapport à un plan vertical de la nacelle, en étant incliné vers l'extérieur ou vers l'intérieur de l'aéronef spatial. Cet angle permet de réduire l'interaction acoustique et radiative, générée par l'environnement créé par des gaz d'échappement du moteur-fusée à l'arrière de l'aéronef spatial.

De plus, avantageusement, sur chacune desdites nacelles, l'empennage vertical et l'empennage horizontal sont agencés de sorte qu'un plan moyen de la dérive fixe de l'empennage vertical et un plan moyen de l'empennage horizontal forment entre eux un angle sensiblement de 90°.

La présente invention concerne également un véhicule tel qu'un lanceur spatial ou une fusée sonde, comprenant un module récupérable, ledit module récupérable correspondant à un aéronef spatial tel que celui décrit ci-dessus.

### BRÈVE DESCRIPTION DES FIGURES

Les figures annexées feront bien comprendre comment l'invention peut être réalisée. Sur ces figures, des références identiques désignent des éléments semblables.
La figures 1 est une vue schématique, de dessus, d'un aéronef spatial conforme à un mode de réalisation préféré de l'invention.
La figure 2 est une vue schématique, en perspective, d'un aéronef spatial conforme au mode de réalisation préféré de l'invention.
La figure 3 est une vue partielle, en vue de côté, du fuselage de l'aéronef spatial.
La figure 4 est une vue partielle, en perspective, du fuselage de l'aéronef spatial.
La figure 5 est une vue schématique partielle, de dessus, illustrant la position d'ondes de choc en lien avec la forme de l'aéronef spatial, conformément à des caractéristiques préférées de l'invention.
La figure 6 est une vue partielle de dessus de l'arrière de l'aéronef spatial, montrant un profil d'expansion de gaz d'échappement générés par un moteur-fusée.
La figure 7 est une vue schématique de l'arrière de l'aéronef spatial des figures 1 et 2.
La figure 8 est une vue en perspective d'une nacelle de l'aéronef spatial des figures 1 et 2, montrant un angle de braquage maximal de volets de direction d'une gouverne de direction.
La figure 9 est une vue très schématique, en perspective, d'une partie de nacelle montrant un braquage de volets de direction.
La figure 10 est une vue schématique en perspective d'un système de commande du braquage de volets de direction d'une gouverne de direction.
La figure 11 est une vue schématique de dessus détaillant l'aménagement des principaux équipements d'un aéronef spatial conforme à un mode de réalisation préféré de l'invention.

### DESCRIPTION DÉTAILLÉE

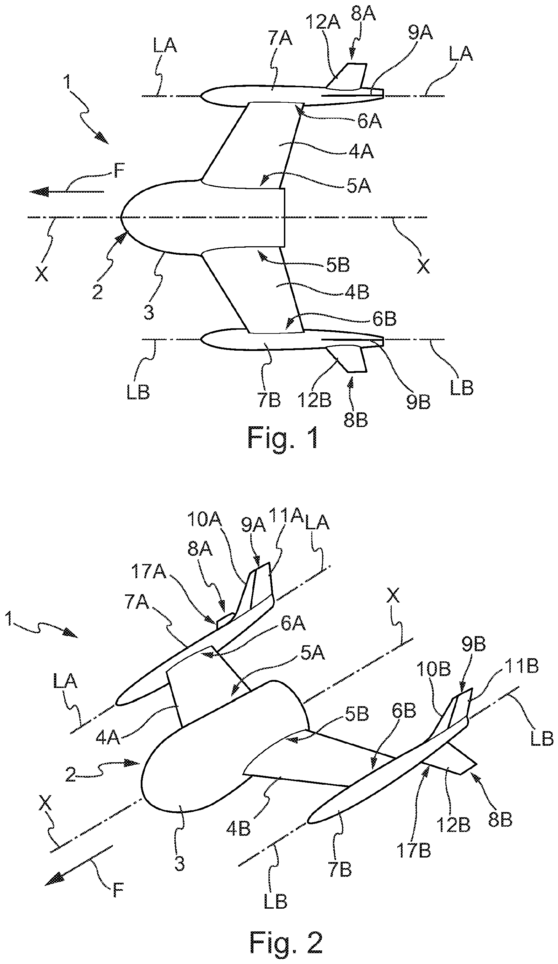

L'aéronef spatial 1, représenté schématiquement dans un mode de réalisation particulier sur les figures 1 et 2, est configuré pour pouvoir voler et ceci notamment à des vitesses élevées, en particulier dans le cadre d'une rentrée atmosphérique. De préférence, l'aéronef spatial 1 est un aéronef spatial sans pilote.

A titre d'application préférée (considérée dans la description suivante), cet aéronef spatial 1 correspond à un module (ou véhicule) volant qui représente une partie récupérable d'un lanceur spatial, d'une fusée sonde ou d'un véhicule expérimental assimilé.

Plus généralement, l'aéronef spatial est destiné à être récupéré sur Terre après sa mission. Cet aéronef doit donc être apte à réaliser une rentrée atmosphérique, dans les conditions difficiles dans lesquelles est généralement réalisée une telle rentrée, ainsi qu'une approche d'une piste d'atterrissage et un atterrissage sur cette piste d'atterrissage. Dans cette application, l'aéronef spatial 1 comporte des éléments et systèmes précisés ci-dessous, qui présentent un coût élevé, et dont la réutilisation est très avantageuse.

Comme représenté sur les figures 1 et 2, l'aéronef spatial 1 comporte un corps central 2 principal, d'axe longitudinal X-X, formant un fuselage 3. Le sens de vol F de l'aéronef spatial 1 est illustré par une flèche sur les figures 1 et 2. Dans le cadre de la présente invention, les termes « avant » et « arrière » sont définis, respectivement, par rapport à l'avant et à l'arrière de l'aéronef spatial 1, le sens de l'arrière vers l'avant étant défini selon le sens F de vol de l'aéronef spatial 1.

Pour faciliter et simplifier la description qui suit, des éléments similaires agencés sur les deux côtés de l'aéronef spatial 1 par rapport au fuselage 3 sont identifiés par des références chiffrées identiques. Toutefois, selon le côté considéré, une lettre A (pour les éléments de droite dans le sens F de vol de l'aéronef spatial 1) ou une lettre B (pour les éléments de gauche dans le sens F de vol de l'aéronef spatial 1) est ajoutée à ces références chiffrées.

Dans le mode de réalisation préféré représenté sur les figures 1 et 2, l'aéronef spatial 1 est pourvu de deux ailes 4A et 4B fixées, de part et d'autre de l'axe longitudinal X-X, respectivement par une extrémité 5A, 5B, au fuselage 3.

L'aéronef spatial 1 est également pourvu, à chacune des extrémités 6A et 6B (des ailes 4A et 4B) opposées auxdites extrémités 5A et 5B, d'une nacelle 7A, 7B allongée, en forme générale d'ogive allongée. La nacelle 7A présente un axe longitudinal LA-LA, et la nacelle 7B présente un axe longitudinal LB-LB. Ces axes longitudinaux LA-LA et LB-LB sont sensiblement parallèles à l'axe longitudinal X-X. Les nacelles 7A et 7B sont donc agencées de part et d'autre du fuselage 3, sensiblement parallèlement à la direction longitudinale du fuselage 3. Cet agencement des nacelles 7A et 7B, latéralement au fuselage 3, est notamment compatible avec divers lanceurs ou fusées sondes ou véhicules expérimentaux assimilés, et/ou divers moteurs-fusées (y compris des mono ou multi-moteurs fusées).

En outre, chacune desdites nacelles 7A et 7B est pourvue d'un empennage horizontal 8A, 8B et d'un empennage vertical 9A, 9B. De façon générale, les empennages assurent, notamment, la stabilité et le contrôle de l'aéronef spatial autour de l'axe de lacet (pour l'empennage vertical 9A, 9B) et autour de l'axe de tangage (pour l'empennage horizontal 8A, 8B).

Chacun des empennages verticaux 9A et 9B comporte, comme représenté sur la figure 2, deux parties, à savoir une partie fixe appelée dérive 10A, 10B qui est fixée sur la nacelle 7A, 7B, et une partie mobile appelée gouverne de direction 11A, 11B, qui est montée de façon mobile sur la dérive 10A, 10B. Les empennages verticaux 9A, 9B ont donc notamment pour fonction d'assurer la stabilité et le contrôle de l'aéronef spatial 1 autour de l'axe de lacet. Leur efficacité à cet effet est optimale du fait de leur positionnement excentré sur les nacelles 7A, 7B, permettant d'accroître le moment exercé autour du centre des masses de l'aéronef, par comparaison avec un empennage central.

De plus, chacun desdits empennages horizontaux 8A et 8B comporte, comme représenté sur la figure 1, une partie mobile 12A, 12B appelée gouverne de profondeur qui est directement montée sur la nacelle 7A, 7B. Ces empennages horizontaux 8A et 8B participent donc à la stabilité et au contrôle de l'aéronef spatial 1 en tangage. De plus, comme précisé ci-dessous, chacune des gouvernes de profondeur 12A, 12B est de type monobloc, ce qui apporte l'efficacité attendue sur l'ensemble du domaine de vol aux empennages horizontaux 8A et 8B.

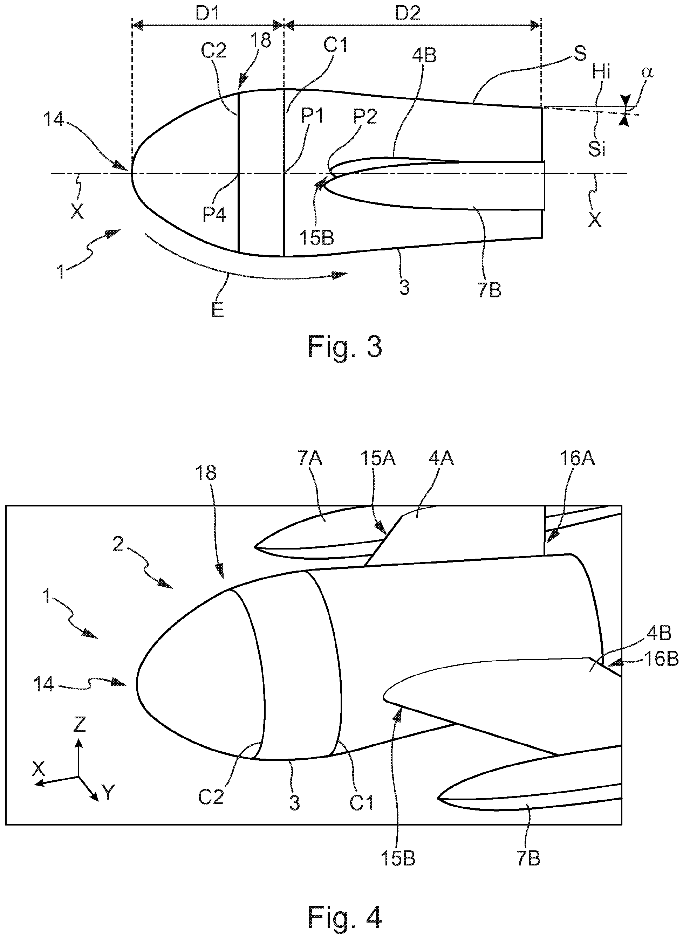

Les ailes, ainsi que les nacelles et les éléments qu'ils portent sont symétriques par rapport à un plan vertical de symétrie XZ (figure 4) de l'aéronef spatial 1. Grâce notamment à ces caractéristiques, et comme précisé davantage ci-dessous, l'aéronef spatial 1 ne présente pas de portance à incidence nulle durant la phase de montée.

Selon l'invention, comme représenté notamment sur la figure 3, le fuselage 3 de l'aéronef spatial 1 présente une section transversale de taille variable le long de l'axe longitudinal X-X. Le fuselage 3 est pourvu à l'avant d'un nez 14. De l'avant (à partir du nez 14) vers l'arrière de l'aéronef spatial 1, dans le sens illustré par une flèche E, le long de l'axe longitudinal X-X, la taille de la section transversale du fuselage 3 augmente (sur une distance D1) jusqu'à une section transversale maximale C1, c'est-à-dire une section transversale présentant une surface maximale, puis elle diminue (sur une distance D2). Une section transversale correspond à une coupe du fuselage 3 dans un plan YZ (figure 4) perpendiculaire à l'axe longitudinal X-X.

De plus, selon l'invention, la section transversale maximale C1 est située à une position longitudinale P1 le long de l'axe longitudinal X-X. Cette position longitudinale P1 est située à l'avant d'une position longitudinale P2 correspondant à la position des bords d'attaque 15A et 15B des ailes 4A et 4B au niveau du fuselage 3, c'est-à-dire à l'emplanture des ailes, à savoir du bord d'attaque 15B de l'aile 4B dans l'exemple de la figure 3.

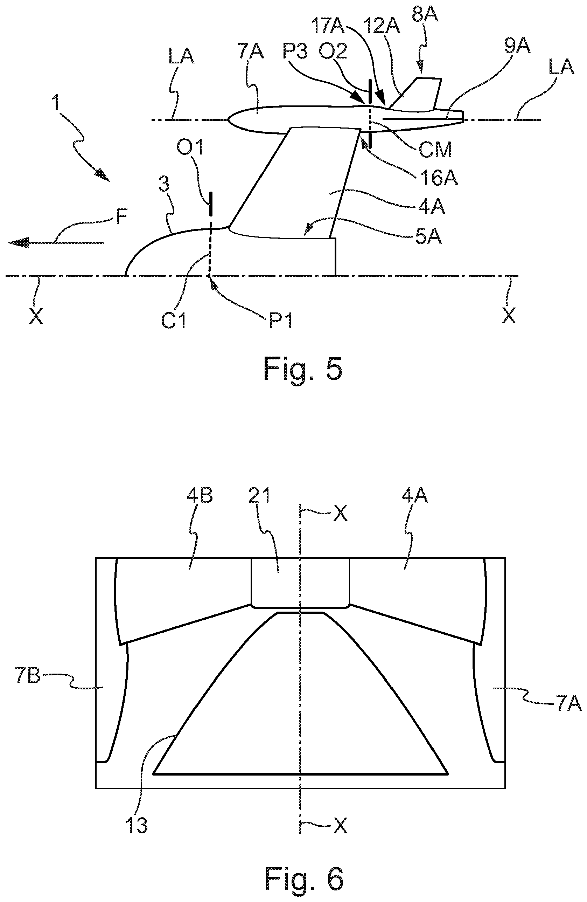

Ainsi, comme la position longitudinale P1 de la section transversale maximale C1 détermine la position longitudinale de l'onde de choc transsonique, en situant la section transversale maximale C1 (position longitudinale P1) à l'avant des bords d'attaque 15A et 15B (position longitudinale P2) des ailes 4A et 4B, on positionne la première onde de choc O1 devant lesdits bords d'attaque 15A et 15B des ailes 4A et 4B dans le régime transsonique, comme illustré sur la figure 5, ce qui permet d'éviter ou tout au moins de limiter une seconde onde de choc au milieu des ailes 4A et 4B. Cette caractéristique empêche l'apparition d'un détachement important de l'écoulement, et permet ainsi d'éviter une perte de stabilité statique longitudinale.

A l'arrière de ladite position longitudinale P1 de section transversale maximale C1, le fuselage 3 présente une surface externe S de forme telle qu'elle présente avec l'axe longitudinal X-X un angle α, de préférence variable. Cet angle α local est défini comme l'angle entre la tangente locale à la surface et l'axe longitudinal X-X (visualisé sur la figure 3 à titre d'exemple entre un trait Si dans le prolongement de la surface externe S et un trait Hi parallèle à l'axe longitudinal X-X) est inférieur ou égal à 7°. Ceci permet d'éviter au maximum un détachement subit de l'écoulement sur le fuselage 3.

La section transversale maximale C1 peut présenter une forme variable, qui peut être circulaire ou non.

Dans le cadre de l'invention, on met en oeuvre une stratégie de conception permettant de vérifier une loi des aires. L'application de cette stratégie a pour objet d'augmenter la section transversale du fuselage 3 pour obtenir une section transversale maximale C1 à l'avant des bords d'attaque 15A et 15B des ailes 4A et 4B, tout en gardant une surface externe S limitée à 7° pour éviter un détachement de couche limite locale.

Une fois la forme du fuselage 3 et la position des ailes 4A et 4B fixées, les nacelles 7A et 7B sont définies en tenant compte des caractéristiques suivantes conformes à la stratégie de conception précitée.

Chacune des nacelles 7A et 7B présente une section transversale de taille variable le long des axes longitudinaux respectifs LA-LA et LB-LB des nacelles 7A et 7B considérées. De l'avant vers l'arrière, le long de l'axe longitudinal X-X, la taille de la section transversale de chacune des nacelles 7A et 7B augmente jusqu'à une section transversale maximale CM (figure 5), puis elle diminue. La section transversale maximale CM se trouve à une position P3 le long dudit axe longitudinal LA-LA, LB-LB, qui est située entre le bord de fuite 16A, 16B de l'aile 4A, 4B au niveau de la nacelle 7A, 7B et le bord d'attaque 17A, 17B de l'empennage horizontal 8A, 8B monté sur la nacelle 7A, 7B, comme représenté pour la nacelle 7A sur la figure 5. Ceci permet de positionner la seconde onde de choc O2 transsonique de sorte qu'elle soit éloignée des surfaces de commande et des surfaces de portance.

Les caractéristiques précédentes entraînent donc des positionnements avantageux des ondes de choc O1 et O2 transsoniques, à proximité des sections transversales maximales C1 et CM, et ceci loin des surfaces de commande et des surfaces de portance, qui restent ainsi le plus possible épargnés de toute perturbation d'onde de choc dans le régime de vol transsonique.

Ainsi, la position longitudinale du foyer aérodynamique en fonction du nombre de Mach et de l'angle d'incidence sur tout le corridor de vol de rentrée atmosphérique de la mission varie peu et de manière lisse et continue.

Par ailleurs, dans un mode de réalisation particulier, le fuselage 3 présente à l'avant de la section transversale maximale C1, à une position P4 (figure 3), une zone d'interface 18 destinée à la fixation de réservoirs d'un lanceur spatial, d'une fusée sonde ou d'un véhicule expérimental assimilé lorsqu'il est pourvu de l'aéronef spatial 1. La section transversale C2 à ladite zone d'interface 18 est avantageusement circulaire. L'évolution de la section du fuselage 3 le long de l'axe X-X est telle que la zone de Mach subsonique reste à l'avant de cette section circulaire. Ceci permet d'éviter que la zone d'interface 18 soit impactée par des écoulements transsoniques importants.

L'aéronef spatial 1 permet de maîtriser le déplacement du foyer aérodynamique surtout le domaine de nombres de Mach de l'aéronef spatial 1.

Concernant les caractéristiques aérodynamiques longitudinales, on obtient un déplacement du foyer aérodynamique longitudinal, continu et lisse, sur tout le domaine de nombres de Mach rencontré durant une rentrée atmosphérique et un retour vers le site de lancement, pouvant aller de Mach 0,25 à Mach 25. Ce comportement avantageux est obtenu sur tout le domaine d'angles d'attaque requis pour assurer la mission.

De plus, concernant les caractéristiques aérodynamiques latérales, on obtient un déplacement du foyer aérodynamique latéral, continu et lisse, sur tout le domaine de nombres de Mach rencontré durant une rentrée atmosphérique et un retour vers le site de lancement. Ce comportement avantageux est également obtenu sur tout le domaine d'angles d'attaque et de dérapage requis pour assurer la mission.

On notera que :
a) l'aéronef spatial 1 étant statiquement stable, longitudinalement et latéralement, lors de la phase de rentrée, les besoins de contrôle des commandes de vol sont minimisés et une partie de la phase de rentrée peut être réalisée dans un mode purement passif ;
b) la maîtrise de l'attitude de rentrée initiale peut être assouplie en raison de la stabilité statique inhérente, qui va automatiquement réorienter l'attitude de l'aéronef spatial par rapport au vent relatif. Cette propriété apporte une robustesse additionnelle après la phase de séparation de la partie consommable ou, en d'autres termes, réduit les besoins requis de commande d'attitude exo-atmosphérique ; et
c) un faible cabrage naturel (sans commande de cabrage) peut être généré lors de la rentrée. Cette caractéristique apporte de la robustesse au système et contribue à réduire le besoin en puissance requis pour les moyens de contrôle.

Par ailleurs, dans un mode de réalisation préféré, représenté sur la figure 6, la position latérale des nacelles 7A et 7B (de part et d'autre de l'axe longitudinal X-X) et leur agencement longitudinal (vers l'arrière) sont configurés pour être compatibles avec un profil 13 d'expansion de gaz d'éjection, à savoir des gaz d'éjection générés par un moteur-fusée 21 à l'arrière de l'aéronef spatial 1. Il faut comprendre par-là que les nacelles 7A et 7B sont situées à l'extérieur d'un flux de gaz d'éjection en fonctionnement, ou tout au moins suffisamment éloignées du centre du profil 13 d'expansion des gaz d'éjection pour supporter les conditions sévères qui règnent à proximité de tels gaz d'éjection. Par conséquent, la structure de l'aéronef spatial 1 et notamment les nacelles 7A et 7B ne sont pas soumises auxdits gaz d'échappement et ne sont donc pas perturbées par ces derniers.

En outre, dans un mode de réalisation préféré, l'empennage horizontal 8A, 8B présente une section transversale variable selon l'axe X-X. De même l'empennage vertical 9A, 9B présente également une section transversale variable selon l'axe X-X. De plus, les sections transversales maximales de l'empennage horizontal 8A, 8B et de l'empennage vertical 9A, 9B sont ségrégués longitudinalement (selon l'axe X-X) et angulairement pour éviter le plus possible des interactions préjudiciables durant les régimes de vol transsoniques et ainsi garder un contrôle latéral et longitudinal sur le régime de vol complet de l'aéronef spatial 1.

A cet effet, la section transversale maximale de l'empennage vertical 9A, 9B est placée à l'arrière (dans le sens de vol F de l'aéronef spatial 1) de la section transversale maximale de l'empennage horizontal 8A, 8B de manière à pouvoir minimiser les interférences aérodynamiques entre les surfaces de commande, en particulier dans lesdits régimes de vol transsoniques. Cette ségrégation est également effective lorsque les surfaces de commande de l'empennage vertical (gouverne de direction) et de l'empennage horizontal (gouverne de profondeur) sont braquées.

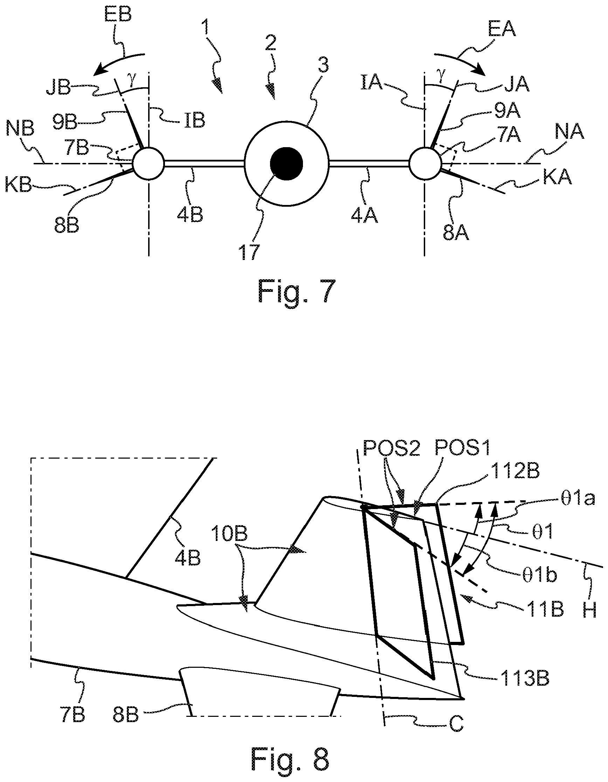

En outre, l'empennage vertical 9A, 9B est agencé au-dessus du plan de symétrie horizontal NA, NB de l'aéronef spatial 1, passant par les ailes 4A, 4B, comme représenté sur la figure 7, pour un roulis favorable induit par une stabilité de dérapage.

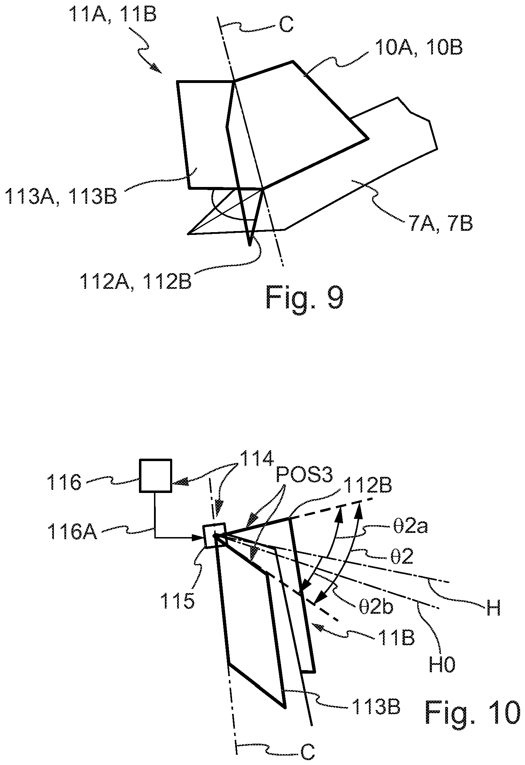

Par ailleurs, dans un mode de réalisation préféré, pour chacun desdits empennages verticaux 9A et 9B, la gouverne de direction 11A, 11B est une gouverne de direction dite double (« split rudder » en anglais). Une telle gouverne de direction 11A, 11B double comprend, comme représenté sur les figures 8 et 9, deux volets de direction, à savoir un volet de direction 112A, 112B et un volet de direction 113A, 113B, qui sont mobiles individuellement et sont indépendants.

Chaque gouverne de direction 11A, 11B, à savoir la partie mobile de chacun des empennages verticaux 9A, 9B, qui représente la surface de contrôle aérodynamique, correspond donc à une gouverne double à deux degrés de liberté indépendants.

Chacun des volets de direction 112A, 112B, 113A, 113B de ces gouvernes de direction 11A et 11B doubles est apte à être braqué individuellement autour d'un axe C (figures 8 à 10) de manière à ce que chaque gouverne de direction 11A, 11B double puisse prendre l'une quelconque des positions suivantes :
- une position fermée POS1 dans laquelle les volets de direction 112B et 113B sont en contact superficiel l'un de l'autre, comme représenté en trait fin sur la figure 8 pour la gouverne de direction 11B ; et
- l'une d'une pluralité de positions ouvertes, dans lesquelles les volets de direction 112B et 113B présentent un angle d'ouverture θ (non nul) entre eux, par exemple de l'ordre de 20°, comme représenté à titre d'illustration sur la figure 8 en trait épais pour une position d'ouverture POS2 donnée d'angle d'ouverture θ1 et sur la figure 10 pour une position d'ouverture POS3 donnée d'angle d'ouverture θ2.

Les braquages des deux volets de direction d'une gouverne de direction (les volets de direction 112A et 113A de la gouverne de direction 11A ou les volets de direction 112B et 113B de la gouverne de direction 11B) peuvent être réalisés :
- soit de façon symétrique, par rapport à une position neutre H, avec des déploiements angulaires (de sens opposés) qui sont de même valeur pour les deux volets de direction 112B et 113B, comme illustré sur la figure 8 où le déploiement (ou déflexion) angulaire du volet de direction 112B par rapport à la position neutre H est illustré par une flèche θ1a (montrant le sens de déploiement et l'angle correspondant) et le déploiement angulaire du volet de direction 113B par rapport à la position neutre H est illustré par une flèche θ1b, l'angle de déflexion θ1b étant égal à l'angle de déflexion θ1a et l'angle d'ouverture θ1 vérifiant la relation θ1=θ1a+θ1b ;
- soit de façon asymétrique, c'est-à-dire que l'un des volets de direction est braqué davantage que l'autre par rapport à une position neutre H, comme illustré sur la figure 10 où le déploiement angulaire du volet de direction 112B par rapport à la position neutre H est illustré par une flèche θ2a et le déploiement angulaire du volet de direction 113B par rapport à la position neutre H est illustré par une flèche θ2b, l'angle de déflexion θ2b étant différent de l'angle de déflexion θ2a et l'angle d'ouverture θ2 vérifiant la relation θ2=θ2a+θ2b.

De plus, la position neutre peut être modifiée, par exemple d'une position H (correspond à la position du plan moyen de la dérive fixe de l'empennage vertical correspondant) à une position H0 comme illustré sur la figure 10.

L'aéronef 1 comporte également un système de commande 114 configuré pour commander le braquage des volets de direction 112A, 112B, 113A et 113B de chacune des gouvernes de direction 11A et 11B.

Ce système de commande 114 comporte, comme représenté schématiquement sur la figure 10 pour la gouverne de direction 11B, un système d'actionnement 115 pour faire pivoter les volets de direction, et une unité de commande 116 pour commander ce système d'actionnement 115 (via une liaison 116A).

D'une manière générale, de telles gouvernes de direction doubles offrent, par leur efficacité accrue, une aptitude optimale à manoeuvrer l'aéronef spatial y compris à des vitesses supersoniques, et cela alors-même que le profil aérodynamique de l'aéronef spatial est de préférence optimisé pour des vitesses subsoniques afin de permettre notamment un atterrissage en toute sécurité.

L'utilisation de telles gouvernes de direction doubles permet en outre que l'aéronef spatial puisse être dépourvu d'empennage central à l'arrière du fuselage, ce qui est notamment avantageux dans les cas où un moteur-fusée est agencé à l'arrière du fuselage, comme cela apparaîtra plus clairement dans ce qui suit.

En outre, dans un mode de réalisation préféré, chacun des empennages verticaux 9A, 9B est agencé sur la nacelle 7A, 7B de sorte qu'un plan moyen JA, JB de la dérive de l'empennage vertical 9A, 9B présente un angle γ non nul par rapport à un plan vertical IA, IB de la nacelle 7A, 7B, en étant incliné vers l'extérieur de l'aéronef spatial 1, dans une direction allant de la nacelle 7A, 7B vers une extrémité supérieure de la dérive fixe 10A, 10B, comme illustré par une flèche EA, EB sur la figure 7. Cet angle γ (compris par exemple entre 7° et 13°) est, de préférence, de l'ordre de 10°. Cet angle γ (de valeur relativement faible) permet de réduire l'interaction acoustique et radiative entre les nacelles, due en particulier à des gaz d'échappement à l'arrière de l'aéronef spatial 1, générés par le moteur-fusée 21 (figure 6).

Dans un mode de réalisation préféré, sur chacune desdites nacelles 7A et 7B, l'empennage vertical 9A, 9B et l'empennage horizontal 8A, 8B sont agencés de sorte que le plan moyen JA, JB de la dérive 10A, 10B et un plan moyen KA, KB de l'empennage horizontal 8A, 8B forment, entre eux, un angle sensiblement de 90°, comme représenté sur la figure 7. Par conséquent, avec l'agencement précité de l'empennage vertical 9A, 9B, chaque empennage horizontal 8A, 8B adopte, pour une ségrégation angulaire proche de 90° par rapport à l'empennage vertical 9A, 9B, un angle vers le bas par rapport au plan NA, NB des ailes 4A et 4B.

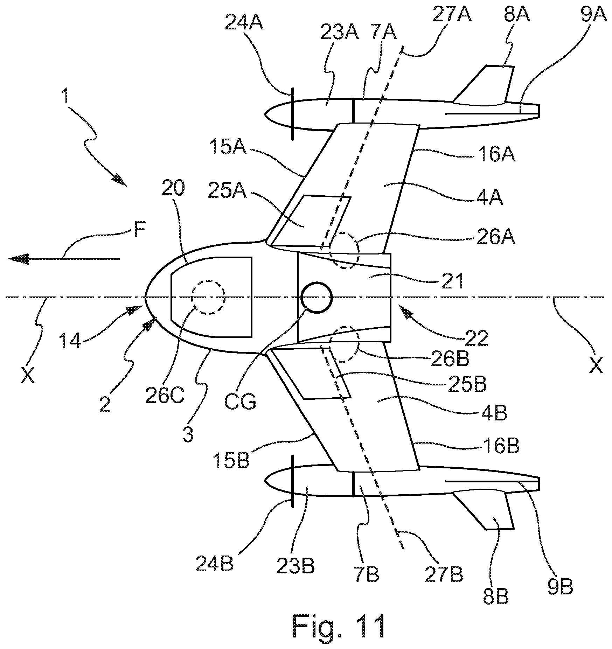

La forme en plan des ailes 4A, 4B est choisie aussi simple que possible, en tenant en compte de considérations de production et de protection thermique. De plus, comme représenté sur la figure 11, les ailes 4A et 4B comprennent des bords d'attaque 15A et 15B et des bords de fuite 16A et 16B qui sont rectilignes. Une flèche modérée d'angle de 30° (à 25% de la corde) est adoptée pour minimiser la perte de portance subsonique due à la flèche.

Par ailleurs, l'aéronef spatial 1 est pourvu d'un ensemble 20 comprenant des systèmes avioniques ainsi qu'un système de pressurisation pour le système de propulsion à moteur-fusée. Cet ensemble 20 est agencé à l'avant du nez 14 de l'aéronef spatial 1, comme représenté sur la figure 11.

Cette position à l'avant contribue au déplacement vers l'avant du centre de gravité CG de l'aéronef spatial 1 et favorise :
- l'augmentation des bras de levier aérodynamiques des empennages horizontaux et verticaux ; et
- l'accès aux éléments de cet ensemble 20 à l'avant du fuselage 3, notamment pour la maintenance.

La forme du nez 14 est conçue pour dissiper l'énergie durant la rentrée atmosphérique. A cet effet, un nez 14 arrondi (émoussé) est prévu pour générer une traînée aérodynamique hypersonique/supersonique relativement élevée.

Par ailleurs l'aéronef spatial 1 comporte un ensemble propulsif tel que le moteur-fusée 21 (figure 11), pour réaliser le lancement du lanceur spatial, ou tout au moins aider au lancement dudit lanceur spatial. Le moteur-fusée 21 est agencé à l'extrémité arrière 22 du fuselage 3. Dans un mode de réalisation particulier (non représenté), l'aéronef spatial 1 peut comporter une pluralité de moteurs-fusées.

L'aéronef spatial 1 comporte également des moyens usuels pour générer son vol au retour, et notamment un système de propulsion aéronautique pourvu d'unités de propulsion aéronautique 23A et 23B de tout type, par exemple un turbopropulseur à hélice dont on a représenté schématiquement des hélices 24A et 24B sur la figure 11. L'aéronef spatial 1 comporte, en outre, des moyens usuels de commande et de pilotage qui ne sont pas décrits d'avantage et qui permettent à l'aéronef spatial 1 notamment de mettre en oeuvre la rentrée atmosphérique et de réaliser une manoeuvre de ressource suivie d'un vol de croisière jusqu'à un atterrissage sur une piste d'atterrissage.

Comme représenté sur la figure 11, les unités de propulsion aéronautique 23A et 23B sont agencées dans les nacelles 7A et 7B, à l'avant desdites nacelles 7A et 7B.

Les unités de propulsion aéronautique 23A et 23B du système de propulsion aéronautique étant agencés à l'avant des nacelles 7A et 7B, ceci permet :
- de déplacer le centre de gravité CG de l'aéronef spatial 1 vers l'avant ;
- d'éloigner le système de propulsion aéronautique autant que possible des gaz d'échappement du moteur-fusée 21, ainsi que de tous les systèmes spatiaux contenus dans le fuselage 3 ;
- d'apporter des caractéristiques favorables pour réduire un battement aérodynamique (aéroélastique) à certaines conditions de vol critiques (en nombre de Mach et de pression dynamique) ;
- de réduire le moment de flexion aux emplantures d'aile durant les manoeuvres de cabrage, en particulier durant la phase de ressource mise en oeuvre après la rentrée atmosphérique ; et
- d'assurer le fonctionnement optimal des unités de propulsion aéronautique 23A et 23B qui bénéficient ainsi d'un écoulement non perturbé en amont des hélices et des entrées d'air.

Par ailleurs, l'aéronef spatial 1 comporte également des réservoirs de carburant 25A et 25B pour les unités de propulsion aéronautique 23A et 23B du système de propulsion aéronautique. Ces réservoirs de carburant 25A et 25B sont agencés dans les ailes 4A et 4B de l'aéronef spatial 1. De préférence, les réservoirs de carburant 25A et 25B sont agencés :
- près du fuselage 3 pour contribuer au positionnement vers l'avant du centre de gravité CG, en tenant compte des flèches des ailes 4A et 4B ; et
- à proximité du centre de gravité CG, afin de minimiser le déplacement du centre de gravité CG lors de la consommation du carburant (contenu dans lesdits réservoirs de carburant 25A et 25B) durant le vol de croisière subsonique de rentrée.

On obtient ainsi un centrage longitudinal propre de l'aéronef spatial 1, sensiblement inchangé le long du vol de la mission. En particulier, lorsque tout le carburant est consommé, la position du centre de gravité CG est appropriée pour un réglage longitudinal et un contrôle latéral, qui sont requis pour un atterrissage ou une manoeuvre de remise des gaz lors d'une phase d'atterrissage de l'aéronef spatial 1.

L'agencement des réservoirs de carburant 25A et 25B, pouvant par exemple recevoir chacun de l'ordre de 300 kg, dans les emplantures d'aile entre les deux longerons d'ailes, aussi près que possible du centre de gravité CG de l'aéronef spatial 1, minimise le déplacement du centre de gravité CG lors de la consommation du carburant. Un léger déplacement vers l'arrière du centre de gravité CG dans les conditions d'atterrissage est toutefois généré pour minimiser la marge statique longitudinale lors de l'arrondi au toucher du sol.

Par ailleurs, pour pouvoir réaliser l'atterrissage, l'aéronef spatial 1 est pourvu d'un ensemble de trains d'atterrissage 26A, 26B et 26C déployables. Les trains d'atterrissage 26A et 26B sont agencés près du fuselage 3 de l'aéronef spatial 1compte tenu des volumes disponibles pour leur aménagement et de la position du centre de gravité à l'atterrissage. Le train avant 26C est logé dans le fuselage le plus avant possible sur l'axe X-X pour :
- en position escamotée, contribuer au positionnement vers l'avant du centre de gravité CG ; et
- en position déployée, assurer une répartition des appuis entre les trains 26A, 26B et 26C, conforme aux règles de l'art dans le domaine aéronautique.

L'aéronef spatial 1 est compatible avec l'agencement dans les carénages proches des extrémités 5A et 5B pour les trains d'atterrissage 26A et 26B et dans le fuselage pour le train 26C d'un ensemble de trains d'atterrissage en particulier simplifiés, ne comprenant aucun frein, aucun système hydraulique et aucun guidage de la roue avant.

L'aéronef spatial 1 présente ainsi une architecture unique et avantageuse combinant les caractéristiques précitées et présentant une cohérence globale pour mettre en oeuvre des fonctions de haut niveau.

On précise ci-après, plus en détail, les avantages dudit aéronef spatial 1, tel que décrit ci-dessus.

L'aéronef spatial 1 est compatible avec l'expansion des gaz d'échappement du moteur-fusée 21 lors de la montée, comme indiqué ci-dessus en référence à la figure 6. À cet effet, ses éléments et systèmes sont situés à l'extérieur du profil 13 d'expansion des gaz d'échappement du moteur-fusée 21 lors de la montée. Ceci assure une compatibilité géométrique des gaz d'échappement avec un moteur-fusée 21 unique. Ce principe de construction géométrique peut être obtenu de façon similaire pour tout type de moteur-fusée ainsi que pour des configurations de lanceurs multi moteurs-fusées.

En outre, l'aéronef spatial 1 peut présenter des caractéristiques supplémentaires contribuant à minimiser les charges thermiques. En particulier, dans un mode de réalisation particulier, l'aéronef spatial 1 comporte une protection thermique sur les bords de fuite, épais, des ailes 4A et 4B et des empennages verticaux 9A et 9B.

En outre, dans une réalisation particulière, l'aéronef spatial 1 peut comporter une protection locale additionnelle (non représentée) sur chaque empennage vertical 9A, 9B. De préférence, cette protection locale comporte une couche de protection, qui peut être éjectable à la coupure du moteur-fusée 21.

Par ailleurs, comme indiqué ci-dessus, on met en oeuvre une répartition appropriée et avantageuse de la masse sur l'aéronef spatial 1 afin de maîtriser la position de son centre de gravité CG (figure 11) et l'aéroélasticité durant toute la mission.

Pour ce faire, les masses principales des systèmes de l'aéronef spatial 1 sont agencées aux positions les plus en avant afin d'obtenir une position avantageuse du centre de gravité CG et de maîtriser cette position à partir du début de la rentrée atmosphérique jusqu'à l'atterrissage.

Dans un mode de réalisation préféré, la masse de chaque unité de propulsion aéronautique 23A, 23B est agencée à l'avant d'une ligne de torsion 27A-27B de l'aile 4A, 4B correspondante, comme représenté sur la figure 11, ce qui permet de minimiser la tendance au flottement, en particulier dans le régime de vol transsonique.

En outre, l'agencement de chaque unité de propulsion aéronautique 23A, 23B dans la nacelle 7A, 7B à l'extrémité d'aile permet de minimiser le moment de flexion des ailes 4A, 4B lors des manoeuvres de cabrage, en particulier à la rentrée.

Par ailleurs, la surface de chaque aile 4A, 4B est choisie pour être compatible avec les phases de rentrée, de vol en croisière et d'atterrissage à environ 250 kg/m² de charge alaire.

Par ailleurs, comme représenté sur la figure 11, on prévoit une séparation (ou éloignement) entre eux des principaux systèmes dans l'aéronef spatial 1.

En particulier, le moteur-fusée 21, les unités de propulsion aéronautique 23A et 23B, et les dispositifs de contrôle sont découplés. On peut ainsi réaliser une répartition adaptée des principaux systèmes pour éviter des interactions négatives entre eux. En particulier, les systèmes spatiaux sont ségrégués par rapport aux systèmes aéronautiques, et le moteur-fusée 21 est protégé à l'arrière de l'aéronef spatial 1 durant la phase de rentrée. De plus, les systèmes avioniques et de pressurisation 20 sont agencés à l'avant de l'aéronef spatial 1 avec les interfaces aux réservoirs de carburant 25A et 25B.

Par ailleurs, la forme générale de l'aéronef spatial 1 permet d'obtenir une portance nulle à un angle d'incidence nul durant la phase de montée. Pour ce faire, on prévoit :
- un fuselage 3 axisymétrique, conduisant à un fuselage symétrique par rapport au plan XY ;
- une position des ailes 4A et 4B à mi-plan ;
- des nacelles 7A, 7B de réception des unités de propulsion aéronautique 23A, 23B qui sont agencées dans le plan XY des ailes 4A et 4B (figure 4) ; et
- les empennages verticaux et horizontaux sont réalisés et agencés afin de minimiser la traînée et les moments perturbateurs durant la phase de montée.

De plus, comme indiqué ci-dessus, chaque empennage vertical 9A, 9B est incliné de l'ordre de 10° (figure 7) afin de réduire l'interaction acoustique et thermique avec les gaz d'échappement du moteur-fusée 21.

En revanche, la phase de rentrée n'influence pas le choix de la forme avant de l'aéronef spatial 1.

Par ailleurs, pour participer à la stabilité longitudinale et latérale de l'aéronef spatial 1, on prévoit, en plus des caractéristiques précitées, des caractéristiques supplémentaires. En particulier :
- la forme en plan des ailes 4A et 4B limite la tendance au cabrage transsonique, en prévoyant un allongement d'aile (rapport entre le carré de l'envergure et la surface de l'aile) approprié, avec une flèche d'aile de 30° à 25 % de la corde moyenne aérodynamique ;
- un bord de fuite épais sur le profil de chaque aile 4A, 4B permet d'augmenter la robustesse du profil à la couche limite transsonique ;
- les carénages des nacelles 7A et 7B et des ailes 4A et 4B sont configurés pour augmenter localement la robustesse à la séparation de flux transsonique ; et
- des ailerons sur les ailes sont de type double, chaque aileron comprenant deux éléments mobiles indépendants, chacun desdits éléments mobiles étant apte à être braqué individuellement, ce qui permet à la fois une augmentation de la stabilité longitudinale et une capacité de contrôle en roulis.

Par ailleurs, on peut mettre en oeuvre des déflexions appropriées des surfaces de contrôle, comprenant de possibles transferts de fonctionnalités entre les ailes 4A et 4B et les empennages horizontaux 8A et 8B, pour remédier à des problèmes aéroélastiques ponctuels dans le régime de vol transsonique. À titre d'exemple, on peut envisager une déflexion d'environ 10° vers le haut d'un aileron externe de chaque aile 4A, 4B lors de la phase transsonique.

En outre, pour chaque empennage horizontal 8A, 8B, on prévoit de préférence les caractéristiques suivantes :
- la gouverne de profondeur 12A, 12B est de type monobloc pour une efficacité supersonique, transsonique et subsonique appropriée ;
- la ligne de charnière est placée avantageusement aux alentours de 50 % de la corde pour minimiser le moment de charnière ; et
- le profil de chaque empennage horizontal 8A, 8B est adapté aux régimes de vol transsonique et subsonique.

En outre, les empennages horizontaux 8A et 8B peuvent également être utilisés pour le contrôle en roulis de l'aéronef spatial 1.

Par ailleurs, l'aéronef spatial 1 présente des performances aérodynamiques accrues, avec notamment une décélération supersonique efficace lors de la rentrée atmosphérique, une manoeuvre de ressource efficace dans le régime de vol transsonique et un vol en croisière subsonique efficace lors du retour au site de lancement.

Les éléments suivants contribuent à une décélération efficace (augmentation du coefficient balistique supersonique) durant la rentrée (à angle d'incidence faible) :
- le nez 14 émoussé (arrondi) au niveau du fuselage 3 avec une évolution le long de l'axe longitudinal du fuselage 3 telle que la zone de Mach subsonique reste à l'avant de la section C2 (figure 3). Ceci permet d'éviter que la zone d'interface 18 soit impactée par des écoulements transsoniques importants ;
- un nez émoussé (arrondi) au niveau de chaque nacelle 7A, 7B, qui est compatible avec l'agencement de l'unité de propulsion aéronautique 23A, 23B ; et
- un bord d'attaque 15A, 15B épais à chaque aile 4A, 4B, ce qui réduit localement les flux thermiques et augmente la traînée supersonique, en particulier dans la zone d'interaction choc/choc à proximité de la nacelle 7A, 7B.

Par ailleurs, les éléments suivants contribuent à une manoeuvre de cabrage efficace dans le régime de vol transsonique (à environ Mach 0,8) :
- la réalisation monobloc de chaque empennage horizontal 8A, 8B ; et
- la ségrégation horizontale entre l'empennage vertical 9A, 9B et l'empennage horizontal 8A, 8B.

En outre, l'aéronef spatial 1 présente une configuration compacte avec un fuselage court et émoussé et une envergure d'aile du même ordre de grandeur, permettant un vol en croisière subsonique efficace lors du retour au site de lancement.

Plus particulièrement :
- l'allongement d'aile est plus favorable, entraînant de fait un meilleur ratio subsonique de portance sur traînée (finesse aérodynamique). Ceci réduit directement et de façon spécifique les besoins en puissance et en masse de l'unité de propulsion aéronautique 23A, 23B ainsi que la consommation de carburant pour la phase de propulsion aéronautique et réduit également le taux de descente en plané, ce qui laisse du temps pour mettre en oeuvre la séquence d'allumage (ou démarrage) du système de propulsion aéronautique, autorisant une seconde tentative de redémarrage dudit système de propulsion aéronautique dans le cas d'une première tentative infructueuse ;
   - l'utilisation de profils épais avec une épaisseur relative de plus de 10% est également cohérente avec un vol en croisière subsonique efficace, ainsi qu'une approche et un atterrissage sans utilisation de dispositifs mobiles de génération de portance élevée au bord d'attaque et/ou au bord de fuite ;
- l'efficacité de l'empennage horizontal 8A, 8B pour atteindre le coefficient de portance maximal lors de l'arrondi à l'atterrissage ;
- le contrôle du roulis par l'intermédiaire d'ailerons d'aile (non représentés) dans le régime subsonique ; et
- une charge alaire compatible avec un train d'atterrissage usuel à trois ensembles de roue(s).

Par ailleurs, l'agencement des surfaces de contrôle en aval des unités de propulsion aéronautique 23A et 23B apportent une performance subsonique additionnelle durant la phase de vol (propulsée avec les unités de propulsion aéronautique à hélices), avec des sens de rotation appropriés des hélices, comme précisé ci-dessous.

Par ailleurs, l'aéronef spatial 1 comporte une intégration avantageuse du système de propulsion aéronautique. Cette propulsion aérodynamique avantageuse est basée sur des unités de propulsion aéronautique 23A, 23B comportant chacune une hélice 24A, 24B, qui est pliable et qui fait partie d'un turbopropulseur.

L'intégration de l'hélice 24A, 24B pliable (du turbopropulseur à hélice) dans le nez de la nacelle 7A, 7B permet d'avoir une traînée faible durant la montée, une hélice protégée et une consommation de carburant faible durant le vol (propulsé par les unités de propulsion aéronautique 23A et 23B) de retour au site de lancement.

L'agencement des unités de propulsion aéronautique 23A et 23B à l'avant des nacelles 7A et 7B présente également les avantages suivants :
- lorsque les unités de propulsion aéronautique 23A et 23B comportent des hélices 24A et 24B contrarotatives :
   - une augmentation significative de portance peut-être générée sur les ailes 4A et 4B ;
   - on dispose d'une efficacité augmentée sur les empennages horizontaux 8A et 8B, requérant des déflexions de compensation (ou d'équilibrage) réduites ;
   - une telle configuration, en plus d'une contribution positive au rapport de portance sur traînée, génère également un flux symétrique propre autour de l'aéronef spatial, ce qui réduit de plus des besoins en équilibrage latéral sur les empennages verticaux 9A et 9B ; et
- lorsque des unités de propulsion aéronautique 23A et 23B ne comportent pas d'hélices 24A et 24B contrarotatives, des déflexions de surfaces de contrôle aérodynamique locales et asymétriques peuvent être mises en oeuvre pour obtenir un vol équilibré longitudinalement et latéralement.

L'agencement des unités de propulsion aéronautique 23A et 23B dans les nacelles 7A et 7B, peut comporter un carénage (non représenté) lorsque l'hélice 24A, 24B correspondante est déployée. Ce carénage :
- réduit les pertes aérodynamiques sur le moyeu de l'hélice 24A, 24B ;
- contribue positivement à la poussée aérodynamique de l'hélice 24A, 24B ; et
- engendre un flux d'air propre sur les pales de l'hélice 24A, 24B.

Par ailleurs, la répartition avantageuse de la masse sur l'aéronef spatial 1 réduit le moment de flexion et torsion aux extrémités 5A et 5B lors de la manoeuvre de ressource de rentrée, en raison du fait que les nacelles 7A et 7B (porteuses des unités de propulsion aéronautique 23A et 23B) sont localisées aux extrémités des ailes 4A et 4B.

En outre, la répartition avantageuse de la masse sur l'aéronef spatial 1, en raison du fait que les nacelles 7A et 7B (porteuses des unités de propulsion aéronautique 23A et 23B) sont localisées aux extrémités des ailes 4A et 4B, avec les unités de propulsion aéronautique 23A et 23B à l'avant de la ligne de torsion 27A, 27B des ailes 4A et 4B, génère une réduction de la tendance au flottement aéro-élastique des ailes 4A et 4B.

## Revendications

1. Aéronef spatial (1), comportant un fuselage (3) et deux ailes (4A, 4B) agencées de part et d'autre dudit fuselage (3), lesdites ailes (4A, 4B) étant agencées de sorte que leurs bords d'attaque (15A, 15B) respectifs sont situés à une position dite première position longitudinale (P2) le long d'un axe longitudinal (X-X) dudit fuselage (3), l'aéronef spatial (1) comprenant également deux nacelles (7A, 7B) agencées aux extrémités (6A, 6B) des ailes (4A, 4B), ces nacelles (7A, 7B) portant chacune un empennage horizontal (8A, 8B) et un empennage vertical (9A, 9B), ledit fuselage (3) présente une section transversale de taille variable le long de l'axe longitudinal (X-X) dudit fuselage (3), tel que, de l'avant vers l'arrière de l'aéronef spatial (1), le long de l'axe longitudinal (X-X), la taille de la section transversale du fuselage (3) augmente jusqu'à une section transversale maximale (C1) puis diminue, la section transversale maximale (C1) se trouve à une position dite seconde position longitudinale (P1) le long dudit axe longitudinal (X-X), cette seconde position longitudinale (P1) étant située à l'avant de ladite première position longitudinale (P2).

2. Aéronef spatial selon la revendication 1,
dans lequel, à l'arrière de ladite seconde position longitudinale (P1) de la section transversale maximale (C1), le fuselage (3) présente une surface externe (S) de forme telle qu'elle présente avec l'axe longitudinal (X-X) un angle (α), qui est inférieur ou égal à 7°.

3. Aéronef spatial selon l'une des revendications 1 et 2,
dans lequel chacune desdites nacelles (7A, 7B) présente une section transversale de taille variable le long de l'axe longitudinal (X-X) dudit fuselage (3), dans lequel, de l'avant vers l'arrière, le long de l'axe longitudinal (X-X), la taille de la section transversale de chacune desdites nacelles (7A, 7B) augmente jusqu'à une section transversale maximale (CM) puis diminue, et dans lequel la section transversale maximale (CM) se trouve à une position (P3) le long dudit axe longitudinal (X-X), qui est située entre le bord de fuite (16A, 16B) de l'aile (4A, 4B) et le bord d'attaque (17A, 17B) de l'empennage horizontal (8A, 8B) de la nacelle (7A, 7B) considérée.

4. Aéronef spatial selon l'une quelconque des revendications précédentes, dans lequel sur chacune desdites nacelles (7A, 7B), l'empennage vertical (9A, 9B) et l'empennage horizontal (8A, 8B) sont agencés sur la nacelle considérée (7A, 7B) de sorte qu'une section transversale maximale de l'empennage vertical (9A, 9B) est située, longitudinalement, à l'arrière d'une section transversale maximale de l'empennage horizontal (8A, 8B).

5. Aéronef spatial selon l'une quelconque des revendications précédentes, dans lequel, sur chacune desdites nacelles (7A, 7B), l'empennage vertical (9A, 9B) et l'empennage horizontal (8A, 8B) sont agencés de sorte qu'un plan moyen (JA, JB) de l'empennage vertical (9A, 9B) et un plan moyen (KA, KB) de l'empennage horizontal (8A, 8B) forment entre eux un angle sensiblement de 90°.

6. Aéronef spatial selon l'une quelconque des revendications précédentes, comportant au moins certains des systèmes suivants :
- des systèmes avioniques et un système de pressurisation (20) agencés dans un nez (14) de l'aéronef spatial (1) ;
- des unités de propulsion aéronautique (23A, 23B) agencées dans les nacelles (7A, 7B), à l'avant desdites nacelles (7A, 7B) ;
- au moins un moteur-fusée (21) agencé à l'arrière (22) de l'aéronef spatial (1) ; et
- des réservoirs de carburant (25A, 25B) agencés dans les ailes (4A, 4B) de l'aéronef spatial (1) à proximité du fuselage (3).

7. Aéronef spatial selon la revendication 6,
dans lequel des, ou les, unités de propulsion aéronautique (23A, 23B) sont agencées à l'avant d'une ligne de torsion (27A-27B) des ailes (4A, 4B) de l'aéronef spatial (1).

8. Aéronef spatial selon l'une quelconque des revendications précédentes, dans lequel les positions en envergure des nacelles (7A, 7B) sont situées au-delà d'un profil (13) d'expansion de gaz d'échappement d'un, ou du, moteur-fusée (21) de l'aéronef spatial (1).

9. Aéronef spatial selon l'une quelconque des revendications précédentes, dans lequel le fuselage (3) est axisymétrique.

10. Aéronef spatial selon l'une quelconque des revendications précédentes, dans lequel les ailes (4A, 4B) sont positionnées à mi-plan.

11. Aéronef spatial selon l'une quelconque des revendications précédentes, dans lequel les nacelles (7A, 7B) sont agencées dans un plan moyen (XY) des ailes (4A, 4B).

12. Aéronef spatial selon l'une quelconque des revendications précédentes, dans lequel chacun desdits empennages verticaux (9A, 9B) comprend une dérive (10A, 10B) fixe et une gouverne de direction (11A, 11B), dans lequel la gouverne de direction (11A, 11B) est une gouverne de direction de type double comprenant deux volets de direction (12A, 12B, 13A, 13B) mobiles indépendants, chacun desdits volets de direction (12A, 12B, 13A, 13B) étant apte à être braqué individuellement de manière à ce que la gouverne de direction (11A, 11B) double puisse prendre l'une quelconque de positions différentes comprenant une position (P1) dite fermée dans laquelle les volets de direction (12A, 12B, 13A, 13B) sont en contact superficiel l'un de l'autre et des positions (P2, P3) dites ouvertes dans lesquelles les volets de direction (12A, 12B, 13A, 13B) présentent des angles d'ouverture (θ1, θ2) particuliers entre eux, et l'aéronef (1) comportant, de plus, un système de commande (14) configuré pour commander le braquage des volets de direction (12A, 12B, 13A, 13B) de chacune des gouvernes de direction (11A, 11B).

13. Aéronef spatial selon la revendication 12, dans lequel chacun desdits empennages verticaux (9A, 9B) est agencé sur la nacelle (7A, 7B) correspondante de sorte qu'un plan moyen (JA, JB) de la dérive fixe (10A, 10B) correspondante présente un angle (γ), compris entre 7° et 13°, par rapport à un plan vertical (IA, IB) de la nacelle (7A, 7B), en étant incliné vers l'extérieur de l'aéronef (1) dans une direction allant de la nacelle (7A, 7B) vers une extrémité supérieure de la dérive fixe (10A, 10B).

14. Véhicule, en particulier un lanceur spatial ou une fusée sonde, comprenant un module récupérable, dans lequel ledit module récupérable est un aéronef spatial (1) selon l'une quelconque des revendications 1 à 13.

## Patentansprüche

1. Raumluftfahrzeug (1), das einen Rumpf (3) und zwei zu beiden Seiten des Rumpfs (3) angeordnete Flügel (4A, 4B) enthält, wobei die Flügel (4A, 4B) so angeordnet sind, dass ihre Vorderkanten (15A, 15B) in einer erste Längsposition (P2) genannten Position entlang einer Längsachse (X-X) des Rumpfs (3) liegen, wobei das Raumluftfahrzeug (1) ebenfalls zwei Gondeln (7A, 7B) enthält, die an den Enden (6A, 6B) der Flügel (4A, 4B) angeordnet sind, wobei diese Gondeln (7A, 7B) je ein waagrechtes Leitwerk (8A, 8B) und ein senkrechtes Leitwerk (9A, 9B) tragen,
wobei der Rumpf (3) entlang der Längsachse (X-X) des Rumpfs (3) einen Querschnitt variabler Größe aufweist, derart, dass die Größe des Querschnitts des Rumpfs (3) von der Vorderseite zur Rückseite des Raumluftfahrzeugs (1) entlang der Längsachse (X-X) bis zu einem maximalen Querschnitt (C1) zunimmt, dann abnimmt, wobei der maximale Querschnitt (C1) sich in einer zweite Längsposition (P1) genannten Position entlang der Längsachse (X-X) befindet, wobei diese zweite Längsposition (P1) vor der ersten Längsposition (P2) liegt.

2. Raumluftfahrzeug nach Anspruch 1, wobei der Rumpf (3) hinter der zweiten Längsposition (P1) des maximalen Querschnitts (C1) eine Außenfläche (S) einer solchen Form aufweist, dass sie mit der Längsachse (X-X) einen Winkel (α) aufweist, der kleiner als oder gleich 7° ist.

3. Raumluftfahrzeug nach einem der Ansprüche 1 und 2, wobei jede der Gondeln (7A, 7B) entlang der Längsachse (X-X) des Rumpfs (3) einen Querschnitt variabler Größe aufweist, wobei die Größe des Querschnitts jeder der Gondeln (7A, 7B) von vorne nach hinten entlang der Längsachse (X-X) bis zu einem maximalen Querschnitt (CM) zunimmt, dann abnimmt, und wobei der maximale Querschnitt (CM) sich in einer Position (P3) entlang der Längsachse (X-X) befindet, die zwischen der Hinterkante (16A, 16B) des Flügels (4A, 4B) und der Vorderkante (17A, 17B) des waagrechten Leitwerks (8A, 8B) der betrachteten Gondel (7A, 7B) liegt.

4. Raumluftfahrzeug nach einem der vorhergehenden Ansprüche, wobei auf jeder der Gondeln (7A, 7B) das senkrechte Leitwerk (9A, 9B) und das waagrechte Leitwerk (8A, 8B) derart auf der betrachteten Gondel (7A, 7B) angeordnet sind, dass ein maximaler Querschnitt des senkrechten Leitwerks (9A, 9B) in Längsrichtung hinter einem maximalen Querschnitt des waagrechten Leitwerks (8A, 8B) liegt.

5. Raumluftfahrzeug nach einem der vorhergehenden Ansprüche, wobei auf jeder der Gondeln (7A, 7B) das senkrechte Leitwerk (9A, 9B) und das waagrechte Leitwerk (8A, 8B) so angeordnet sind, dass eine Mittelebene (JA, JB) des senkrechten Leitwerks (9A, 9B) und eine Mittelebene (KA, KB) des waagrechten Leitwerks (8A, 8B) zwischen sich einen Winkel von im Wesentlichen 90° bilden.

6. Raumluftfahrzeug nach einem der vorhergehenden Ansprüche, das mindestens bestimmte der folgenden Systeme aufweist:
- Avioniksysteme und ein Drucksystem (20), die in einer Nase (14) des Raumluftfahrzeugs (1) angeordnet sind;
- Luftfahrtantriebseinheiten (23A, 23B), die in den Gondeln (7A, 7B) an der Vorderseite der Gondeln (7A, 7B) angeordnet sind;
- mindestens einen Raketenantrieb (21), der an der Rückseite (22) des Raumluftfahrzeugs (1) angeordnet ist; und
- Treibstofftanks (25A, 25B), die in den Flügeln (4A, 4B) des Raumluftfahrzeugs (1) in der Nähe des Rumpfs (3) angeordnet sind.

7. Raumluftfahrzeug nach Anspruch 6, wobei Luftfahrtantriebseinheiten oder die Luftfahrtantriebseinheiten (23A, 23B) vor einer Torsionslinie (27A-27B) der Flügel (4A, 4B) des Raumluftfahrzeugs (1) angeordnet sind.

8. Raumluftfahrzeug nach einem der vorhergehenden Ansprüche, wobei die Spannweitenpositionen der Gondeln (7A, 7B) jenseits eines Abgasexpansionsprofils (13) eines oder des Raketenantriebs (21) des Raumluftfahrzeugs (1) liegen.

9. Raumluftfahrzeug nach einem der vorhergehenden Ansprüche, wobei der Rumpf (3) achsensymmetrisch ist.

10. Raumluftfahrzeug nach einem der vorhergehenden Ansprüche, wobei die Flügel (4A, 4B) auf halber Ebene positioniert sind.

11. Raumluftfahrzeug nach einem der vorhergehenden Ansprüche, wobei die Gondeln (7A, 7B) in einer Mittelebene (XY) der Flügel (4A, 4B) angeordnet sind.

12. Raumluftfahrzeug nach einem der vorhergehenden Ansprüche, wobei jedes der senkrechten Leitwerke (9A, 9B) ein ortsfestes Seitenleitwerk (10A, 10B) und ein Seitenruder (11A, 11B) enthält, wobei das Seitenruder (11A, 11B) ein Seitenruder vom geteilten Typ ist, das zwei unabhängige mobile Lenkklappen (12A, 12B, 13A, 13B) enthält, wobei jede der Lenkklappen (12A, 12B, 13A, 13B) geeignet ist, einzeln ausgefahren zu werden, damit das geteilte Seitenruder (11A, 11B) eine beliebige von verschiedenen Positionen einnehmen kann, darunter eine so genannte geschlossene Position (P1), in der die Lenkklappen (12A, 12B, 13A, 13B) in Oberflächenkontakt miteinander sind, und so genannte offene Positionen (P2, P3), in denen die Lenkklappen (12A, 12B, 13A, 13B) besondere Öffnungswinkel (θ1, θ2) untereinander aufweisen, und das Luftfahrzeug (1) außerdem ein Steuersystem (14) aufweist, das konfiguriert ist, das Ausfahren der Lenkklappen (12A, 12B, 13A, 13B) jedes der Seitenruder (11A, 11B) zu steuern.

13. Raumluftfahrzeug nach Anspruch 12, wobei jedes der senkrechten Leitwerke (9A, 9B) auf der entsprechenden Gondel (7A, 7B) so angeordnet ist, dass eine Mittelebene (JA, JB) des entsprechenden ortsfesten Seitenleitwerks (10A, 10B) einen Winkel (γ) zwischen 7° und 13° bezüglich einer senkrechten Ebene (IA, IB) der Gondel (7A, 7B) aufweist, indem sie zur Außenseite des Luftfahrzeugs (1) in einer Richtung von der Gondel (7A, 7B) zu einem oberen Ende des ortsfesten Seitenleitwerks (10A, 10B) geneigt ist.

14. Fahrzeug, insbesondere eine Trägerrakete oder eine Sondenrakete, das ein wiederverwendbares Modul enthält, wobei das wiederverwendbare Modul ein Raumluftfahrzeug (1) nach einem der Ansprüche 1 bis 13 ist.

## Claims

1. Space aircraft (1), having a fuselage (3) and two wings (4A, 4B) arranged on either side of said fuselage (3), said wings (4A, 4B) being arranged such that their respective leading edges (15A, 15B) are situated at a position called first longitudinal position (P2) along a longitudinal axis (X-X) of said fuselage (3), the space aircraft (1) also comprising two nacelles (7A, 7B) arranged at the ends (6A, 6B) of the wings (4A, 4B), these nacelles (7A, 7B) each bearing a horizontal empennage (8A, 8B) and a vertical empennage (9A, 9B), said fuselage (3) has a transverse section of variable size along the longitudinal axis (X-X) of said fuselage (3), such that, from the front towards the rear of the space aircraft (1), along the longitudinal axis (X-X), the size of the transverse section of the fuselage (3) increases as far as a maximum transverse section (C1) and then decreases, the maximum transverse section (C1) is at a position called second longitudinal position (P1) along said longitudinal axis (X-X), this second longitudinal position (P1) being situated in front of said first longitudinal position (P2).

2. Space aircraft according to Claim 1, wherein, behind said second longitudinal position (P1) of the maximum transverse section (C1), the fuselage (3) has an external surface (S) of a shape such that it has, with the longitudinal axis (X-X), an angle (α), which is smaller than or equal to 7°.

3. Space aircraft according to either of Claims 1 and 2, wherein each of said nacelles (7A, 7B) has a transverse section of variable size along the longitudinal axis (X-X) of said fuselage (3), wherein, from the front towards the rear, along the longitudinal axis (X-X), the size of the transverse section of each of said nacelles (7A, 7B) increases as far as a maximum transverse section (CM) and then decreases, and wherein the maximum transverse section (CM) is at a position (P3) along said longitudinal axis (X-X), which is situated between the trailing edge (16A, 16B) of the wing (4A, 4B) and the leading edge (17A, 17B) of the horizontal empennage (8A, 8B) of the nacelle (7A, 7B) in question.

4. Space aircraft according to any one of the preceding claims, wherein, on each of said nacelles (7A, 7B), the vertical empennage (9A, 9B) and the horizontal empennage (8A, 8B) are arranged on the nacelle in question (7A, 7B) such that a maximum transverse section of the vertical empennage (9A, 9B) is situated, longitudinally, behind a maximum transverse section of the horizontal empennage (8A, 8B).

5. Space aircraft according to any one of the preceding claims, wherein, on each of said nacelles (7A, 7B), the vertical empennage (9A, 9B) and the horizontal empennage (8A, 8B) are arranged such that a mean plane (JA, JB) of the vertical empennage (9A, 9B) and a mean plane (KA, KB) of the horizontal empennage (8A, 8B) form between them an angle of substantially 90°.

6. Space aircraft according to any one of the preceding claims, having at least some of the following systems:
- avionics systems and a pressurization system (20) that are arranged in a nose (14) of the space aircraft (1);
- aeronautical propulsion units (23A, 23B) arranged in the nacelles (7A, 7B), at the front of said nacelles (7A, 7B);
- at least one rocket motor (21) arranged at the rear (22) of the space aircraft (1); and
- fuel reservoirs (25A, 25B) arranged in the wings (4A, 4B) of the space aircraft (1) near the fuselage (3).

7. Space aircraft according to Claim 6, wherein some, or the, aeronautical propulsion units (23A, 23B) are arranged in front of a swing line (27A-27B) of the wings (4A, 4B) of the space aircraft (1).

8. Space aircraft according to any one of the preceding claims, wherein the spanwise positions of the nacelles (7A, 7B) are situated beyond a profile (13) of expansion of exhaust gases of a, or the, rocket motor (21) of the space aircraft (1).

9. Space aircraft according to any one of the preceding claims, wherein the fuselage (3) is axisymmetric.

10. Space aircraft according to any one of the preceding claims, wherein the wings (4A, 4B) are positioned at mid-plane.

11. Space aircraft according to any one of the preceding claims, wherein the nacelles (7A, 7B) are arranged in a mean plane (XY) of the wings (4A, 4B).

12. Space aircraft according to any one of the preceding claims, wherein each of said vertical empennages (9A, 9B) comprises a fixed vertical stabilizer (10A, 10B) and a rudder (11A, 11B), wherein the rudder (11A, 11B) is a split rudder comprising two independent mobile rudder flaps (12A, 12B, 13A, 13B), each of said rudder flaps (12A, 12B, 13A, 13B) being able to be steered individually such that the split rudder (11A, 11B) can adopt any one of different positions including a position (P1) called closed in which the rudder flaps (12A, 12B, 13A, 13B) are in surface contact with one another and positions (P2, P3) called open in which the rudder flaps (12A, 12B, 13A, 13B) have specific opening angles (θ1, θ2) between them, and the aircraft (1) having, in addition, a control system (14) configured to control the steering of the rudder flaps (12A, 12B, 13A, 13B) of each of the rudders (11A, 11B).

13. Space aircraft according to Claim 12, wherein each of said vertical empennages (9A, 9B) is arranged on the corresponding nacelle (7A, 7B) such that a mean plane (JA, JB) of the corresponding fixed vertical stabilizer (10A, 10B) has an angle (γ), of between 7° and 13°, with respect to a vertical plane (IA, IB) of the nacelle (7A, 7B), being inclined towards the outside of the aircraft (1) in a direction going from the nacelle (7A, 7B) towards an upper end of the fixed vertical stabilizer (10A, 10B).

14. Vehicle, in particular a space launcher or a sounding rocket, comprising a recoverable module, wherein said recoverable module is a space aircraft (1) according to any one of Claims 1 to 13.
